# FASCICULE DE BREVET EUROPEEN

(11) **EP 2 259 936 B1**
(45) Date de publication et mention de la délivrance du brevet: **04.11.2015**
(21) Numéro de dépôt: 09715743.2
(22) Date de dépôt: 02.03.2009
(51) Int. Cl.: B60G 21/00, B62K 5/01, B62K 5/10, B60G 17/0195

(54) **VÉHICULE MOTORISÉ À INCLINAISON COMMANDÉE**
KRAFTFAHRZEUG MIT GESTEUERTER NEIGUNG
MOTOR VEHICLE WITH CONTROLLED INCLINATION

(30) Priorité: 29.02.2008 FR 0801139
(43) Date de publication de la demande: 15.12.2010
(73) Titulaire: Moulene, 78670 Villennes-sur-Seine (FR)
(72) Inventeur: MOULENE, Daniel, F-78670 Villennes-sur-Seine (FR); MOULENE, Thierry, F-78670 Villennes Sur Seine (FR)
(74) Mandataire: Thibon, Norbert
(86) Numéro de dépôt international: PCT/IB2009/000400
(87) Numéro de publication internationale: WO 2009/106978

(56) Documents cités:
- WO-A-97/27071
- WO-A-2007/127783
- WO-A1-97/27071
- DE-A1- 19 738 826
- DE-A1- 19 738 826
- FR-A- 2 646 379
- FR-A- 2 872 773
- FR-A1- 2 272 773
- FR-A1- 2 872 772
- US-A1- 2006 170 171

## Description

La présente invention se rapporte aux véhicules motorisés à plus de deux roues tels que plus particulièrement conçus pour une utilisation préférentielle, mais non exclusive, en zone urbaine : par exemple des scooters, motocyclettes, ou autres véhicules peu larges.

Elle concerne plus spécifiquement un tel véhicule comportant un siège conducteur compris dans un poste de conduite de dimensions telles qu'il ne peut accueillir qu'une seule personne en largeur. Ce type de véhicule occupe ainsi une place moindre lorsqu'il est stationné et circule plus aisément dans le trafic, notamment dans le trafic urbain, et occupe moins de place sur la chaussée.

Certains de ces véhicules comportent des moyens d'équilibrage dans les virages ou sur un sol incliné par rapport à l'horizontale. Ces moyens d'équilibrage agissent notamment par inclinaison du châssis du véhicule (lui-même relié au poste de conduite) et prévoient parfois une inclinaison simultanée de tout ou partie des roues du véhicule. Dans des versions manuelles du véhicule, ils sont exclusivement commandés par le conducteur seul, dans des versions automatiques du véhicule, ils sont exclusivement commandés par un dispositif automatique dédié comprenant par exemple un actionneur électrique ou un dispositif hydraulique.

La commande automatique permanente, au moyen d'un actionneur électrique ou hydraulique, de ces moyens d'équilibrage, tel que cela est décrit dans le document de brevet FR 2 272 773 qui divulgue des moyens d'équilibrage et un dispositif de commande automatique associé, nécessite la mise en oeuvre d'un actionneur de puissance relativement élevée, ce qui augmente le coût du véhicule, et ce d'autant plus que la mise en oeuvre d'un actionneur de puissance élevée nécessite la fourniture d'une énergie également relativement élevée, ce qui a alors pour conséquence d'augmenter en outre la taille, le poids, et donc le coût du véhicule ainsi que sa consommation d'énergie, et, en conséquence, de limiter cette commande automatique à des véhicules chers et/ou de puissance élevée.

Le Document WO97/27071 divulgue un véhicule selon le préambule de la revendication 1, mais sans contrôle automatique possible au-delà du seuil, où seul le conducteur contrôle l'équilibrage, avec ou sans assistance.

L'invention porte sur un véhicule selon la revendication 1, du type décrit ci-dessus, et propose que les moyens d'équilibrage soient alternativement commandés ou non par un dispositif automatique en fonction des conditions de déplacement de ce véhicule.

Plus précisément, l'invention propose que les moyens d'équilibrage du véhicule agissent par inclinaison d'au moins la partie du châssis qui supporte le conducteur, et qu'ils soient commandés automatiquement lorsque l'un au moins des paramètres parmi, notamment, la vitesse, l'accélération, ou l'inclinaison du véhicule (ou une combinaison de deux au moins de ces paramètres) est inférieur à un seuil principal prédéterminé, et qu'ils puissent être commandés par des moyens autres qu'automatiques lorsque ce paramètre (ou la combinaison précitée de tout ou partie de ces paramètres) est supérieur au même seuil principal prédéterminé. Dans ce dernier cas, ces moyens d'équilibrage peuvent alors être commandés par le seul conducteur, avec ou sans assistance.

Aux fins évoquées ci-dessus, le véhicule selon l'invention comporte donc, selon l'une de ses caractéristiques, d'une part, un ou plusieurs capteurs de vitesse, d'accélération, et/ou d'inclinaison. Il comporte par ailleurs des moyens de commande automatique des moyens d'équilibrage lorsque l'information fournie par ce ou ces capteurs est en-deçà d'un seuil principal prédéterminé, ainsi que des moyens de commutation qui autorisent la désactivation de la commande automatique des moyens d'équilibrage lorsque l'information fournie par ce ou ces capteurs est au-delà de ce même seuil. Par "information fournie par les capteurs", on entend ici, ainsi que dans tout ce qui suit, la valeur de l'un ou de plusieurs des paramètres mesurés par les différents capteurs, ou toute combinaison de tout ou partie des valeurs des paramètres mesurés par ces capteurs, dont au moins par le capteur de vitesse.

L'invention prévoit avantageusement que d'autres types de capteurs puissent remplacer ou être associés aux capteurs évoqués précédemment, par exemple un capteur de couple de braquage du moyen de commande de direction, des gyroscopes, des accéléromètres, ...

La possibilité, grâce aux moyens de commutation cités ci-dessus, de désactiver la commande automatique des moyens d'équilibrage du véhicule, permet de limiter la taille et le poids de l'actionneur nécessaire à la commande automatique de ces moyens, tout en maintenant les possibilités d'équilibrage du véhicule en fonction des nécessités imposées par la conduite, et en conservant le confort de conduite apporté, par exemple à faible vitesse, par la commande automatique de ces moyens d'équilibrage. Il s'ensuit une limitation du poids et donc du coût du véhicule à confort de conduite égal.

Dans un mode de réalisation préféré de l'invention, les moyens d'équilibrage sont automatiquement commandés dès le démarrage du véhicule et jusqu'à ce que le ou les capteur(s) fournissent une information supérieure au seuil principal prédéterminé évoqué plus haut. Egalement, les moyens d'équilibrage sont automatiquement commandés, en dehors des phases de démarrage, lorsque le ou lesdits capteur(s) fournissent une information inférieure au seuil principal, et demeurent automatiquement commandés tant que l'information fournie par ledit ou lesdits capteur(s) est inférieure à ce seuil principal.

Selon une autre caractéristique de l'invention dans ses modes de réalisation préférés, les moyens d'équilibrage sont également automatiquement commandés dès lors que, le véhicule se déplaçant dans des conditions dans lesquelles l'information fournie par le ou les capteurs est supérieure au seuil principal et que, cette information devenant inférieure à un seuil principal descendant, elle demeure inférieure au seuil principal. En d'autres termes, par exemple lorsque l'information fournie par le capteur est, à titre d'exemple non limitatif, une information de vitesse, les moyens d'équilibrage sont automatiquement commandés lorsque le véhicule démarre et que sa vitesse reste inférieure au seuil principal, lorsque le véhicule se déplace à une vitesse inférieure au seuil principal, et lorsque, le véhicule se déplaçant à une vitesse supérieure à ce seuil principal, il décélère jusqu'à atteindre un seuil principal descendant : dans ce cas, les moyens d'équilibrage sont automatiquement commandés tant que la vitesse du véhicule demeure inférieure au seuil principal. En d'autres termes encore, le seuil principal en-deçà duquel les moyens d'équilibrage sont automatiquement commandés présente une hystérésis. Il ressort de ce qui précède que le seuil principal est avantageusement supérieur au seuil principal descendant.

Avantageusement, le véhicule selon l'invention comporte également des moyens de positionnement à la verticale (ou dans une position très proche de la verticale), lorsqu'il est à l'arrêt ou à très faible vitesse quand il est proche de l'arrêt, ou quand il recule. Le véhicule selon l'invention comporte donc également des moyens de détection de la position verticale.

Ces moyens qui amènent le véhicule en position verticale (ou dans une position très proche de la verticale) sont particulièrement utiles pour éviter, par exemple, au conducteur d'avoir à stabiliser le véhicule à l'arrêt, notamment avec ses pieds comme il le ferait avec un véhicule à deux roues classique. Ils évitent par ailleurs que le véhicule reste dans une position d'inclinaison par rapport à la verticale lorsque l'arrêt se produit. Ils évitent également avantageusement toute inclinaison intempestive du véhicule notamment lors des manoeuvres de stationnement (réalisation d'une manoeuvre de stationnement en créneau, par exemple) ou lorsque le véhicule roule à très faible vitesse, par exemple pour accéder à une place de stationnement étroite et/ou entourée de murs. Ils garantissent donc un stationnement confortable, même sur un terrain accidenté ou en pente.

L'invention prévoit avantageusement que les moyens de positionnement à la verticale (ou dans une position très proche de celle-ci) soient essentiellement actifs quand le véhicule est à l'arrêt ou quand le véhicule recule, ainsi que quand les moyens d'équilibrage du véhicule sont automatiquement commandés.

Selon une caractéristique du véhicule selon l'invention, les moyens de positionnement à la verticale du véhicule sont automatiquement commandés lorsque l'information fournie par le ou les capteurs précédemment évoqués est inférieure à un seuil de maintien vertical préalablement défini (et notamment lorsque le véhicule est à l'arrêt ou proche de l'arrêt), et automatiquement désactivés lorsque l'information reçue du ou des capteurs précités est supérieure au seuil de maintien vertical évoqué ci-dessus.

Selon une autre caractéristique de l'invention, le seuil de maintien vertical présente, de même que le seuil principal, une hystérésis. En d'autres termes, lorsque l'information fournie par le ou les capteurs est, à titre d'exemple non limitatif, une information de vitesse, les moyens de positionnement à la verticale sont automatiquement commandés lorsque la vitesse est inférieure au seuil de maintien vertical, ainsi que lorsque, le véhicule se déplaçant à une vitesse supérieure à ce seuil, il décélère jusqu'à atteindre un seuil de maintien vertical descendant : les moyens de positionnement à la verticale sont alors automatiquement commandés tant que la vitesse du véhicule demeure inférieure au seuil de maintien vertical. Il ressort de ce qui précède que le seuil de maintien vertical descendant est avantageusement inférieur au seuil vertical de maintien.

De plus, dans un des modes de réalisation préférés de l'invention, le véhicule comporte un commutateur manuel de position verticale qui, dans son état actif, commande automatiquement les moyens de positionnement à la verticale ou dans une position proche de la verticale, et ce même si l'information reçue du ou des capteurs est supérieure au seuil de maintien vertical. Cette fonctionnalité confère au véhicule selon l'invention un avantage supplémentaire en termes de confort de conduite, notamment dans le cas où ce véhicule manoeuvre entre d'autres véhicules dans la circulation, ou lorsqu'il se déplace le long d'un mur, ou encore lors de manoeuvres de stationnement en pente, dans lesquelles le conducteur peut être amené à solliciter une accélération qui conduise le véhicule à atteindre, par exemple, une vitesse supérieure à la vitesse seuil de maintien vertical. La possibilité d'utiliser le commutateur manuel de position verticale permet alors à l'utilisateur du véhicule selon l'invention de forcer celui-ci dans sa position verticale ou proche de la verticale pour un agrément de conduite maximal.

Selon différents modes de réalisation de l'invention, le seuil de maintien vertical peut être identique au seuil principal, ou il peut être différent de ce dernier. Dans ce cas il est préférentiellement inférieur au seuil principal.

Selon une autre caractéristique de l'invention, le véhicule comporte également des moyens de blocage dans sa position verticale ou dans une position très proche de la verticale lorsqu'il est à l'arrêt.

Avantageusement, le véhicule selon l'invention comporte des moyens de limitation de son inclinaison à un angle prédéfini, de telle sorte que, par exemple, à l'arrêt, même en cas de défaillance des moyens de positionnement et de maintien à la verticale, le véhicule ne bascule pas.

Avantageusement, le véhicule selon l'invention comporte également des moyens de blocage de son inclinaison à une valeur maximale prédéfinie, fixe ou dépendant, notamment, de sa vitesse.

Ces moyens empêchent que le véhicule ne s'incline au-delà de la valeur maximale prédéfini lorsque le véhicule est engagé, par exemple, à vitesse relativement élevée dans une courbe prononcée. Dans ce cas, lorsque l'inclinaison du véhicule atteint ladite valeur maximale prédéfinie, lesdits moyens de blocage de l'inclinaison empêcheront le véhicule de s'incliner plus encore, alors même que les moyens d'équilibrage auraient tendu à commander une inclinaison plus importante. Contrairement à une simple butée, ces moyens de blocage empêchent que le véhicule ne se renverse du côté de la force centripète qui a alors tendance à le redresser vers l'intérieur du virage. Ces moyens de blocage sont conçus de telle manière que la mécanique grâce à laquelle est obtenue l'inclinaison du véhicule soit simple et fiable.

Avantageusement, un calculateur assure la gestion automatique des moyens de limitation de l'inclinaison, des moyens de blocage de l'inclinaison, ou encore des deux en même temps, en fonction des informations fournies par le ou les capteurs. En particulier, le calculateur comporte des moyens de détermination de l'angle maximal d'inclinaison en fonction, notamment de la vitesse et/ou de l'accélération du véhicule : cet angle maximal d'inclinaison sera avantageusement plus faible par rapport à la verticale lorsque le véhicule est en situation de déplacement à faible vitesse et/ou à faible accélération que lorsque le même véhicule se déplace à vitesse et/ou à accélération élevées.

L'invention propose que les moyens de limitation de l'inclinaison soient commandés automatiquement quel que soit l'état de commande des moyens d'équilibrage précédemment évoqués. En d'autres termes, l'invention propose que la commande des moyens de limitation de l'inclinaison du véhicule soit indépendante de la commande des moyens d'équilibrage de ce dernier, et cela même si le calculateur qui les gère est inclus dans le dispositif de commande automatique précédemment desdits moyens d'équilibrage.

Dans un mode de réalisation avantageux de l'invention, le seuil principal est différent selon que les moyens de commutation évoqués plus haut sont dans leur état dans lequel les moyens d'équilibrage sont automatiquement commandés (accélération), ou qu'ils sont dans leur état dans lequel ils autorisent la désactivation de la commande automatique des moyens d'équilibrage (décélération), présentant ainsi une hystérésis.

De manière préférentielle, le seuil au-delà duquel lesdits moyens de commutation autorisent la désactivation de la commande automatique des moyens d'équilibrage est légèrement supérieur au seuil en-deçà duquel lesdits moyens de commutation sont dans leur état dans lequel les moyens d'équilibrage sont automatiquement commandés.

De cette manière, lorsque le véhicule est dans des conditions où les moyens de commutation autorisent la désactivation de la commande automatique des moyens d'équilibrage, par exemple à faible vitesse après le démarrage, le seuil en-deçà duquel lesdits moyens de commutation sont dans leur état dans lequel les moyens d'équilibrage sont automatiquement commandés est d'abord franchi, avant que le seuil au-delà duquel lesdits moyens de commutation autorisent la désactivation de la commande automatique des moyens d'équilibrage ne soit franchis. Ainsi, les moyens de commutation ne risquent pas d'entrainer une succession trop immédiate de commande automatique des moyens d'équilibrage et d'autorisation de désactivation de cette dernière.

Afin d'améliorer encore le confort et la stabilité du véhicule, l'invention prévoit, outre les moyens qui viennent d'être décrits, des moyens complémentaires qui seront décrits ci-après et qui permettent de modifier la sensibilité de l'inclinaison de la partie inclinable du véhicule et de tout ou partie de ses roues au mouvement prédéfini de l'organe de direction mentionné plus haut (volant, guidon, ...).

Selon un mode de réalisation de l'invention, le véhicule comporte une barre de torsion associée à l'organe de commande de direction du véhicule, volant ou guidon. Avantageusement, cette barre de torsion est rendue solidaire de l'organe de commande de direction du véhicule.

Dans un de ses modes de réalisation particuliers, l'invention prévoit par ailleurs avantageusement que, au-delà d'une valeur seuil préalablement définie de la vitesse, de l'accélération, ou de l'inclinaison du véhicule, il y ait une légère désolidarisation entre l'organe de commande de direction du véhicule et les roues directrices.

Pour cela, l'invention prévoit des moyens de désolidarisation partielle des roues de l'organe de commande de direction du véhicule, cela sur un angle de braquage prédéterminé.

Le véhicule selon l'invention comporte encore avantageusement, dans un de ses modes de réalisation particuliers, des moyens complémentaires qui commandent automatiquement les moyens de désolidarisation partielle des roues lorsque l'information fournie par le ou les capteurs précédemment évoqués est supérieure à un seuil de désolidarisation partielle des roues préalablement défini. Ces moyens complémentaires de commande interdisent également automatiquement la commande automatique des moyens de désolidarisation partielle des roues du véhicule lorsque l'information reçue du ou des capteurs précités est inférieure au seuil de désolidarisation partielle des roues évoqué ci-dessus.

Pour ce faire, l'invention prévoit de manière avantageuse que l'effort à exercer sur l'organe de direction (typiquement le volant) pour réaliser une variation donnée de trajectoire ou d'inclinaison du véhicule soit supérieur à l'effort à fournir pour obtenir la même variation de trajectoire ou d'inclinaison à vitesse, accélération, ou inclinaison inférieure audit seuil de désolidarisation partielle des roues.

Dans ce sens, le véhicule selon l'invention est avantageusement doté de moyens de durcissement de la direction du véhicule qui imposent l'augmentation d'effort citée ci-dessus au-delà de la valeur seuil précitée, également désignée comme seuil de durcissement.

Les moyens de durcissement de la direction du véhicule peuvent être constitués par une barre de torsion, associée ou rendue solidaire des moyens de commande de direction du véhicule.

Ces moyens de durcissement peuvent être réalisés à l'aide d'une direction assistée à assistance variable qui, à faible vitesse, rend la direction plus douce et, à plus grande vitesse, réalise le durcissement souhaité. En particulier dans le cas d'une assistance électrique, celle-ci est avantageusement programmée pour suivre une loi plus fine qu'un simple seuil de déclenchement. Ceci évite que le conducteur ressente les changements de comportement, et permet à celui-ci d'améliorer ses sensations de conduite.

Selon l'une de ses caractéristiques dans un de ses modes de réalisation particuliers, le véhicule selon l'invention comporte alors avantageusement des moyens de commande automatique de ces moyens de durcissement de la direction. Selon une caractéristique complémentaire de l'invention, les moyens de durcissement de la direction sont ainsi automatiquement commandés dès lors que l'information reçue des capteurs précédemment évoqués est supérieure au seuil de durcissement préalablement défini.

Selon différents modes de réalisation de l'invention, ce seuil de durcissement peut être égal au seuil principal précédemment mentionné, ou différent de celui-ci. Dans ce dernier cas, il est avantageusement supérieur au seuil principal.

Il est à noter que les moyens de durcissement de la direction peuvent également agir sur la base d'informations fournies par des capteurs de couple, et en modifiant le couple à exercer sur l'organe de direction pour réaliser un déplacement donné de celui-ci.

Dans un de ses modes de réalisation, l'invention prévoit également avantageusement que, au-delà d'un seuil de modification préalablement défini de l'un ou de plusieurs des paramètres mesurés par les capteurs, la variation de l'inclinaison du véhicule obtenue pour un mouvement donné de l'organe de direction soit supérieure à la variation d'inclinaison du même véhicule pour un même mouvement de l'organe de direction réalisé lorsque ce ou ces paramètres sont en-deçà de ce seuil de variation. En d'autres termes, dans le cas où le paramètre considéré est, à titre d'exemple non limitatif, la vitesse du véhicule, un même mouvement de l'organe de direction induira, à vitesse élevée, une inclinaison du véhicule plus importante que l'inclinaison du véhicule obtenue avec le même mouvement de l'organe de direction à faible vitesse.

Le véhicule selon l'invention comporte alors avantageusement des moyens de modification de la loi qui lie les mouvements de l'organe de direction aux mouvements du châssis.

Selon l'une de ses caractéristiques dans un de ses modes de réalisation particuliers, le véhicule selon l'invention comporte alors également des moyens de commande automatique de ces moyens de modification lorsque le seuil de modification cité ci-dessus est dépassé. Selon une caractéristique complémentaire de l'invention, les moyens de modification de la loi liant mouvements de l'organe de direction et mouvements du châssis sont ainsi automatiquement commandés dès lors que le seuil de modification précité est atteint.

Selon différents modes de réalisation de l'invention, le seuil de modification peut être égal au seuil principal précédemment mentionné, ou au seuil de durcissement évoqué plus haut, ou il peut être différent de ces valeurs. Dans ce cas, il est avantageusement supérieur au seuil principal.

Il est à noter que les moyens évoqués ci-dessus (durcissement de la direction, modification de la loi liant mouvements de l'organe de direction et mouvements du châssis), non limitatifs, peuvent également être mis en oeuvre simultanément.

Il est également à noter que ces moyens, qui sont, ainsi qu'il découle de ce qui précède, préférentiellement mis en oeuvre au-delà du seuil principal, peuvent être utilisés comme moyens d'assistance à la conduite du véhicule selon l'invention en particulier lorsque la désactivation de la commande automatique des moyens d'équilibrage de ce véhicule est autorisée (c'est-à-dire au-delà du seuil principal).

Selon une variante de l'invention, quand la commande automatique des moyens d'équilibrage est désactivée, une partie de l'énergie est fournie par l'actionneur du dispositif de commande automatique des moyens d'équilibrage, en aide ou en assistance à l'effort que doit produire le conducteur pour incliner ou redresser le véhicule.

Afin d'augmenter encore le confort et la sécurité du véhicule, l'invention prévoit en outre des aménagements particuliers qui vont maintenant être décrits de manière plus précise.

L'un des aménagements évoqués ci-dessus prévoit qu'une porte d'accès au poste de conduite soit implantée de chaque côté de celui-ci. Ceci facilite l'accès au siège conducteur quelle que soit la position de stationnement du véhicule, y compris lorsque celui-ci est arrêté contre un mur, et augmente donc les possibilités et le confort d'utilisation de ce véhicule.

Un autre de ces aménagements prévoit que le toit de la carrosserie formant structure de protection du conducteur comporte un panneau ouvrant. Selon différents modes de réalisation de l'invention, non limitatifs, ce panneau peut être pivotant autour d'un axe sensiblement parallèle ou perpendiculaire à l'axe longitudinal du véhicule, ou il peut être coulissant selon la direction longitudinale du véhicule.

De manière avantageuse, les différents éléments que constituent la ou les portes latérales et le panneau de toit ouvrant ou mobile peuvent être ouverts et refermés de manière séparée ou ensemble par groupes de deux ou trois d'entre eux.

Ces différents aménagements, ainsi que d'autres caractéristiques et avantages de l'invention seront précisés dans la description qui suit illustrée par la figuré 1 qui représente une vue en perspective d'un véhicule selon l'invention.

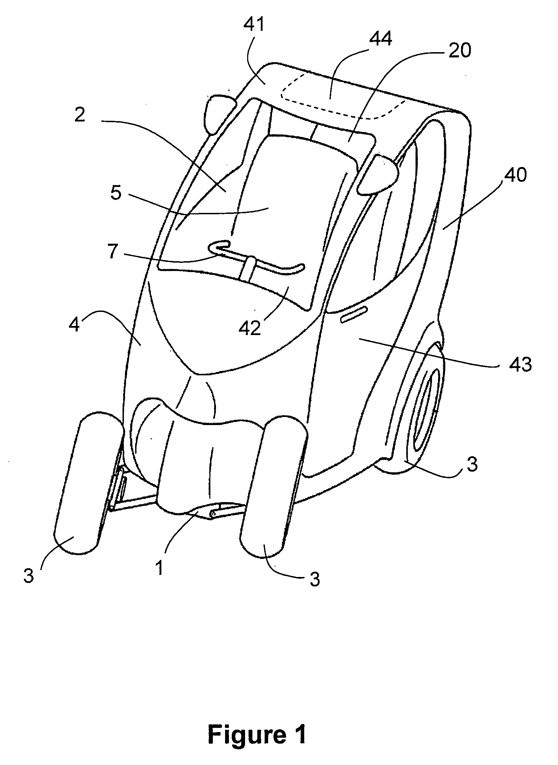

Tel qu'illustré par cette figure, le véhicule selon l'invention comporte un châssis 1, un poste de conduite 2 solidaire de celui-ci, et quatre roues 3, également reliées au châssis. Préférentiellement, les roues situées à l'avant du véhicule sont directrices. Le véhicule selon l'invention comporte également un groupe motopropulseur (non représenté sur la figure 1) qui peut être, à titre d'exemple non limitatif, thermique, électrique, hybride, ou de tout autre type.

Le poste de conduite 2 comprend un siège conducteur 5 et un seul, les dimensions du poste de conduite étant telles que le véhicule ne peut accueillir qu'une seule personne en largeur.

Selon le mode de réalisation illustré par la figure 1, le poste de conduite 2 est ainsi fermé par une carrosserie 4 comportant des panneaux latéraux 40, un toit 41, ainsi qu'un pare-brise avant 42.

Selon une caractéristique de l'invention, une porte 43 est réalisée dans chacun des panneaux latéraux 40, afin de permettre au conducteur d'accéder au poste de conduite 2 par n'importe quel côté du véhicule. Les portes 43 peuvent être coulissantes ou pivotantes, leur sens d'ouverture étant défini en fonction de critères d'accessibilité et d'encombrement du véhicule. Selon différents modes de réalisation, ces portes peuvent être équipées de panneaux transparents ou de vitres de manière à augmenter la visibilité pour le conducteur.

Selon une autre caractéristique du véhicule selon l'invention, le toit 41 comporte avantageusement un panneau ouvrant 44. Ce panneau, qui peut être, selon différents modes de réalisation, coulissant selon un axe sensiblement parallèle à l'axe longitudinal du véhicule, ou pivotant autour d'un axe sensiblement parallèle audit axe longitudinal ou perpendiculaire à ce dernier, présente deux avantages principaux. D'une part, son ouverture permet un accès au poste de conduite, en particulier à la zone de transport d'objets située à l'arrière du véhicule, par exemple pour y déposer des objets. D'autre part, dans le cas où il est coulissant, le panneau 44 permet, par son ouverture, une aération de l'habitacle du véhicule, ainsi qu'un accès plus facile dans le cas où l'utilisation du véhicule implique de nombreux arrêts et sorties du conducteur.

Pour diriger le véhicule, le conducteur dispose d'un organe de direction 7, ici un guidon selon le mode de réalisation illustré par la figure 1, avantageusement un volant selon des modes de réalisation alternatifs de l'invention.

Pour assurer une tenue de route correcte, un véhicule de ce type comporte des moyens d'équilibrage (non représentés sur la figure 1) qui agissent par inclinaison simultanée du châssis 1 (solidaire du poste de conduite 2) et de tout ou partie des roues 3.

Le véhicule comporte un ensemble de capteurs, notamment de vitesse, d'accélération, et/ou d'inclinaison (non représentés sur la figure 1). Lorsque l'information fournie par lesdits capteurs (valeur d'un paramètre spécifique, ou combinaison de valeurs de tout ou partie des paramètres mesurés par lesdits capteurs) est inférieure à un seuil principal S1 préalablement défini, les moyens d'équilibrage sont automatiquement commandés par un dispositif automatique (non représenté sur la figure 1). Le véhicule comporte par ailleurs des moyens de commutation (non représentés) qui, lorsque l'information fournie par lesdits capteurs est supérieure au seuil principal S1, autorisent la désactivation de la commande automatique des moyens d'équilibrage par le dispositif automatique. De manière connue, la commande automatique des moyens d'équilibrage est réalisée, par exemple, grâce à un moteur électrique et un calculateur.

Les moyens d'équilibrage sont, de plus, automatiquement commandés lorsque, le véhicule se déplaçant, l'information fournie par le ou les capteurs atteint, en décroissant, un seuil principal descendant S1', inférieur au seuil principal S1, et demeure inférieure audit seuil principal S1.

Selon différentes versions du véhicule, la commande automatique des moyens d'équilibrage du véhicule est ainsi, au-delà du seuil principal S1, automatiquement activée, automatiquement désactivée, ou il est laissé au choix du conducteur de l'activer ou de la désactiver. On parlera alors de version automatique du véhicule lorsque la commande automatique des moyens d'équilibrage reste automatiquement active au-delà du seuil principal S1, et de version manuelle lorsque cette commande automatique est automatiquement désactivée au-delà du seuil principal S1. Il est à noter que, dans ce cas, les moyens d'équilibrage peuvent être, au-delà du seuil S1, commandés par le conducteur seul avec ou sans assistance. Enfin, dans une autre version du véhicule, qui est la seule selon l'invention, la désactivation de la commande automatique des moyens d'équilibrage est, au-delà du seuil principal S1, laissée au choix du conducteur (version mixte du véhicule), le véhicule selon l'invention comporte alors des moyens de désactivation des moyens de commutation. Ces derniers peuvent par exemple comprendre d'une information visuelle ou d'un commutateur manuel associé à un voyant de signalisation changeant d'état lors du franchissement du seuil S1.

A titre d'exemple non limitatif, lorsque le capteur utilisé pour gouverner la commutation de la commande des moyens d'équilibrage est un capteur de vitesse, le seuil principal S1 peut être fixé à quelques dizaines de kilomètres/heure, par exemple entre 5 et 40 km/h, préférentiellement entre 7 et 15 km/h.

Ainsi qu'il a été évoqué précédemment, ceci permet, d'une part, lorsque le véhicule se déplace dans des conditions par exemple de vitesse, d'accélération, ou d'inclinaison limitées, de bénéficier de la commande automatique des moyens d'équilibrage, pour un confort de conduite optimal. Par ailleurs, ceci permet, lorsque les conditions par exemple de vitesse, d'accélération, ou d'inclinaison sont plus élevées, de bénéficier d'autres moyens de commande des moyens d'équilibrage, comme, à titre d'exemple non limitatif, une commande par le conducteur. Dans ce dernier cas, la désactivation de la commande automatique des moyens d'équilibrage permettra notamment de bénéficier des capacités d'anticipation du conducteur pour une conduite mieux adaptée aux conditions de circulation du véhicule. Ainsi qu'il a été précisé précédemment, la possibilité de désactivation de la commande automatique des moyens d'équilibrage permet en outre de limiter la puissance de l'actionneur électrique ou hydraulique du dispositif automatique, et, notamment, de prévoir un moteur de faible puissance (et donc de coût peu élevé), tout en préservant le confort et les avantages de conduite apportés par le dispositif automatique en-deçà du seuil principal S1.

Le véhicule comporte également des moyens de positionnement à la verticale (ou dans une position très proche de la verticale). Ainsi qu'il a été précisé plus haut, ces moyens de positionnement vertical interviennent essentiellement lorsque le véhicule est à l'arrêt ou est proche de l'arrêt, ainsi que lorsque le véhicule recule.

Il comprend également des moyens de commande de ces moyens de positionnement à la verticale.

Ces moyens de positionnement vertical du véhicule sont automatiquement commandés lorsque l'information fournie par le ou les capteurs est inférieure à un seuil de maintien vertical préalablement établi S2, inférieur ou égal au seuil principal S1. De même, les moyens de positionnement à la verticale sont automatiquement désactivés lorsque l'information reçue dudit ou desdits capteurs est supérieure au seuil de maintien vertical S2.

Par ailleurs, ces moyens sont automatiquement commandés lorsque, le véhicule se déplaçant, l'information fournie par le ou les capteurs atteint, en décroissant, un seuil de maintien vertical descendant S2', inférieur au seuil de maintien vertical S2, et demeure inférieure audit seuil de maintien vertical S2.

Le véhicule est en outre muni d'un commutateur manuel de position verticale (non représenté), dont l'actionnement commande automatiquement les moyens de positionnement à la verticale, et ce quelle que soit la valeur de l'information fournie par le ou les capteurs évoqués plus haut.

Le véhicule comporte en outre des moyens de blocage en position verticale ou très proche de la verticale à l'arrêt.

Le véhicule selon l'invention comporte également des moyens de limitation de son inclinaison. Ainsi qu'il a été mentionné précédemment, ces moyens de limitation permettent en particulier d'améliorer le comportement dynamique du véhicule lors de phases de conduite dans des courbes. Les moyens de limitation de l'inclinaison sont avantageusement associés à des moyens de blocage de l'inclinaison nécessaires lorsque le véhicule aborde une courbe serrée notamment, par exemple, à vitesse élevée. Le véhicule comporte par ailleurs des moyens de commande automatique des moyens de limitation de l'inclinaison et des moyens de blocage de cette dernière. Les moyens de limitation et de blocage de l'inclinaison du véhicule sont automatiquement commandés quel que soit le mode de commande des moyens d'équilibrage du véhicule.

Le véhicule comporte en outre des moyens complémentaires augmentant encore son confort et sa sécurité, ainsi que son agrément de conduite. Ainsi qu'il a été précédemment mentionné, ces moyens complémentaires peuvent être utilisés comme moyens d'assistance par le conducteur, par exemple lorsque la commande automatique des moyens d'équilibrage par ledit dispositif automatique a été désactivée au-delà du seuil principal S1.

Ainsi, selon un mode de réalisation préféré, le véhicule comporte des moyens qui, à partir d'une valeur seuil S3 (ou seuil de durcissement) de la vitesse, de l'accélération et/ou de l'inclinaison du véhicule (ou de tout combinaison de tout ou partie de ces paramètres), augmentent l'effort à exercer sur l'organe de direction 7 pour réaliser une variation donnée d'inclinaison ou de trajectoire.

Alternativement ou simultanément selon le mode de réalisation choisi, le véhicule comporte des moyens qui modifient la loi de réponse des moyens d'équilibrage aux mouvement de l'organe de direction 7 à partir notamment d'une valeur seuil S4 (ou seuil de modification) de la vitesse, de l'accélération, ou de l'inclinaison, ou de toute combinaison de tout ou partie de ces paramètres. Par exemple, ainsi qu'il a été décrit plus haut, les moyens qui modifient la loi de réponse des moyens d'équilibrage agissent de telle manière que, au-delà du seuil S4 évoqué ci-dessus, un mouvement donné de l'organe de direction 7 se traduira par une variation d'inclinaison ou de trajectoire du véhicule plus importante que la variation résultant du même mouvement de l'organe de direction 7 en-deçà dudit seuil S4.

Selon un mode de réalisation préféré de l'invention, les moyens qui tendent à augmenter l'effort à exercer sur l'organe de direction 7 et/ou qui modifient la loi de réponse des moyens d'équilibrage sont automatiquement commandés ou sont désactivés selon que vitesse, accélération, et/ou inclinaison du véhicule (ou toute combinaison de tout ou partie de ces paramètres) sont supérieures ou inférieures respectivement au seuil S3 et/ou S4. Il est à noter que les seuils S3 et/ou S4 peuvent être identiques au seuil principal S1 précédemment défini, ou différents de celui-ci. Ils peuvent également être égaux entre eux ou non. Dans tous les cas, les seuils S3 et S4 seront toutefois préférentiellement supérieurs au seuil principal S1.

Dans un mode de réalisation préféré de l'invention, les moyens de durcissement de la direction (qui augmentent l'effort à exercer sur l'organe de direction) et les moyens de modification de la loi de réponse des moyens d'équilibrage aux mouvements de l'organe de direction 7 sont mis en oeuvre en tant que moyens d'assistance annexes à la conduite lorsque la commande automatique des moyens d'équilibrage a été désactivée au-delà du seuil principal S1. Dans ce cas, ils interviennent préférentiellement en complément d'une éventuelle assistance partielle à la commande (manuelle) des moyens d'équilibrage.

Il est à noter qu'ils peuvent également être mis en oeuvre dans une version entièrement automatique du véhicule selon l'invention, dans laquelle la commande automatique des moyens d'équilibrage est toujours active, quelles que soient la vitesse, l'accélération, et/ou l'inclinaison de ce véhicule. Dans ce cas, les seuils S3 et S4 seront supérieurs au seuil de redressement S2.

L'invention telle qu'elle vient d'être décrite permet ainsi de proposer un véhicule dans lequel différents moyens d'assistance à la conduite peuvent être activés ou désactivés en fonction des conditions de circulation, pour un agrément et une sécurité de conduite dans la version mixte du véhicule.

L'invention ne saurait toutefois se limiter aux modes de réalisation et moyens décrits dans le présent document, et elle s'étend également à tout moyen équivalent et à toute combinaison techniquement opérante de tels moyens, dans les limites définies par les revendications. En particulier, les capteurs fournissant les informations aux moyens de commutation ne sont pas limités aux capteurs de vitesse, d'accélération, et/ou d'inclinaison évoqués dans la présente description. Il est également tout à fait envisageable, selon différentes variantes de l'invention, que les seuils S1, S2, S3, S4, puissent varier en fonction de conditions climatiques telles que la pluie, la neige, le verglas, ou qu'ils puissent être modifiés par le conducteur. Par ailleurs, si l'invention est limitée à un véhicule comportant des roues, elle est tout à fait applicable à un véhicule par exemple muni de patins pour circuler sur la neige, ou pour lequel le contact au sol est assuré par tout type de moyen approprié au revêtement sur lequel le véhicule est amené à se déplacer.

## Revendications

1. Véhicule motorisé à au moins trois roues (3), comportant des moyens d'équilibrage par inclinaison d'au moins la partie de son châssis (1) qui supporte le poste de conduite, et un ou plusieurs capteurs de vitesse, d'accélération, et/ou d'inclinaison, dont au moins un capteur de vitesse, tel que lesdits moyens d'équilibrage sont adaptés à être commandés par un dispositif de commande automatique du type comportant un actionneur et un calculateur ou par une commande manuelle d'un conducteur dudit véhicule,
et que des moyens de commutation sont prévus pour activer ledit dispositif de commande automatique des moyens d'équilibrage dès lors que l'information fournie par ledit capteur de vitesse ou les dits capteurs est inférieure à un seuil principal (S1), de telle sorte que dans ces conditions de déplacement lesdits moyens d'équilibrage sont commandés automatiquement,
**caractérisé en ce que** lesdits moyens de commutation étant prévus en outre pour autoriser la désactivation dudit dispositif de commande automatique desdits moyens d'équilibrage dès lors que l'information fournie par ledit capteur de vitesse ou les dits capteurs est supérieure audit seuil principal (S1), de telle sorte que dans ces conditions de déplacement, lesdits moyens d'équilibrage sont commandés alternativement soit par le conducteur si ledit dispositif de commande automatique est désactivé, soit par ledit dispositif de commande automatique. s'il n'est pas désactivé.

2. Véhicule selon la revendication 1, **caractérisé en ce que** lesdits moyens d'équilibrage sont automatiquement commandés, d'une part, au démarrage du véhicule et jusqu'à ce que l'information fournie par ledit capteur ait atteint ledit seuil principal (S1), et, d'autre part, lorsque, le véhicule se déplaçant, l'information fournie par ledit capteur est supérieure à un seuil principal descendant (S1') et que ladite information atteint, en décroissant, ledit seuil principal descendant (S1'), lesdits moyens d'équilibrage étant alors automatiquement commandés tant que ladite information demeure inférieure audit seuil principal descendant (S1) et jusqu'à l'arrêt dudit véhicule.

3. Véhicule selon l'une quelconque des revendications 1 ou 2, **caractérisé en ce qu'**il comporte également des moyens de limitation et des moyens de blocage de son inclinaison qui d'une part limitent l'angle d'inclinaison des éléments inclinables à une valeur maximale de telle sorte que le véhicule ne bascule pas ni à l'arrêt ni en roulant, et qui d'autre part, lorsque l'angle d'inclinaison est ainsi limité, empêchent le redressement du véhicule.

4. Véhicule selon l'une quelconque des revendications 1 à 3, **caractérisé en ce que** lorsque l'information fournie par ledit capteur est supérieure audit seuil principal (S1), la commande automatique desdits moyens d'équilibrage est automatiquement désactivée.

5. Véhicule selon l'une quelconque des revendications 1 à 3, **caractérisé en ce que** lorsque l'information fournie par ledit capteur est supérieure audit seuil principal (S1), lesdits moyens d'équilibrage sont automatiquement commandés dans un mode d'assistance à la conduite du véhicule.

6. Véhicule selon l'une quelconque des revendications 1 à 5, **caractérisé en ce qu'**il comprend en outre des moyens de positionnement à la verticale ou dans une position très proche de la verticale au moins de sa partie inclinable, ainsi que des moyens pour commander automatiquement lesdits moyens de positionnement à la verticale lorsque l'information fournie par ledit capteur est inférieure à un seuil de maintien vertical (S2)

7. Véhicule selon la revendication 6, **caractérisé en ce que** lesdits moyens de positionnement à la verticale ou dans une position très proche de la verticale sont automatiquement commandés d'une part, au démarrage du véhicule et jusqu'à ce que l'information fournie par ledit capteur ait atteint ledit seuil de maintien vertical (S2), et, d'autre part, lorsque, le véhicule se déplaçant, l'information fournie par ledit capteur est supérieure à un seuil de maintien vertical descendant (S2') et que ladite information fournie atteint, en décroissant, ledit seuil de maintien vertical descendant (S2'), lesdits moyens de positionnement à la verticale ou dans une position très proche de la verticale étant alors automatiquement commandés tant que ladite information demeure inférieure audit seuil de maintien vertical descendant (S2) et jusqu'à l'arrêt dudit véhicule.

8. Véhicule selon l'une ou l'autre des revendications 6 ou 7, **caractérisé en ce que** lesdits moyens de positionnement à la verticale sont automatiquement commandés lorsque le véhicule recule.

9. Véhicule selon l'une quelconque des revendications 1 à 8, **caractérisé en ce qu'**il comporte un commutateur manuel de position verticale pour commander automatiquement lesdits moyens de positionnement à la verticale ou dans une position très proche de la verticale.

10. Véhicule selon l'une quelconque des revendications 1 à 9, **caractérisé en ce qu'**il comporte des moyens de blocage de la partie inclinable dudit véhicule en position verticale ou très proche de la verticale lorsque ledit véhicule est à l'arrêt.

11. Véhicule selon l'une quelconque des revendications 1 à 10, **caractérisé en ce qu'**il comporte une barre de torsion solidaire d'un organe (7) de commande de direction qui limite la rotation des roues (3) par rapport au mouvement dudit organe de commande de direction.

12. Véhicule selon l'une quelconque des revendications 1 à 10, **caractérisé en ce qu'**il comporte des moyens de désolidarisation partielle des roues de l'organe de commande de direction (7) du véhicule sur un angle de braquage préalablement déterminé, des moyens de commande automatique desdits moyens de désolidarisation partielle, et **en ce que** lesdits moyens de désolidarisation partielle sont commandés automatiquement ou automatiquement désactivés selon que l'information fournie par ledit capteur est respectivement supérieure ou inférieure à un seuil de désolidarisation partielle (S3, S4) préalablement déterminé.

13. Véhicule selon la revendication 12, **caractérisé en ce que** lesdits moyens de désolidarisation partielle et lesdits moyens de commande automatique desdits moyens de désolidarisation partielle consistent en une barre de torsion solidaire de l'organe de commande de direction (7)

14. Véhicule selon l'une quelconque des revendications 1 à 13 comportant un siège conducteur (20) compris dans un poste de conduite (2) de dimensions telles qu'il ne peut accueillir qu'une seule personne en largeur, **caractérisé en ce que** chaque côté du poste de conduite est équipé d'une porte d'accès (43), **en ce que** ledit poste de conduite (2) comporte un panneau de toit mobile (44), et **en ce que** chaque porte d'accès (43) et ledit panneau de toit (44) s'ouvrent et se referment soit indépendamment l'un de l'autre, soit simultanément par deux ou trois d'entre eux.

## Patentansprüche

1. Motorisiertes Fahrzeug mit mindestens drei Rädern (3), das Mittel zum Herstellen eines Gleichgewichts durch Neigen mindestens eines Teils seines Chassis (1), der den Fahrersitz trägt, und einen oder mehrere Sensoren für Geschwindigkeit, Beschleunigung und/oder Neigung, darunter mindestens einen Geschwindigkeitssensor, aufweist, dergestalt dass die Mittel zum Herstellen eines Gleichgewichts dazu ausgelegt sind, durch eine automatische Steuervorrichtung des Typs, der ein Stellglied und einen Computer aufweist, oder durch eine manuelle Steuerung eines Fahrers des Fahrzeugs gesteuert zu werden,
und dass Schaltmittel zum Aktivieren der automatischen Steuervorrichtung der Mittel zum Herstellen eines Gleichgewichts vorgesehen sind, sobald Datenwerte, die von dem Geschwindigkeitssensor oder den Sensoren, geliefert werden, unterhalb eines Hauptschwellenwertes (S1) liegen, derart, dass unter diesen Fahrbedingungen die Mittel zum Herstellen eines Gleichgewichts automatisch gesteuert werden,
**dadurch gekennzeichnet, dass** die Schaltmittel außerdem zur Freigabe der Deaktivierung der automatisches Steuervorrichtung der Mittel zum Herstellen eines Gleichgewichts vorgesehen sind, sobald die von dem Geschwindigkeitssensor oder den Sensoren gelieferten Datenwerte größer als der Schwellwert (S1) sind, dergestalt, dass unter diesen Fahrbedingungen die Mittel zum Herstellen eines Gleichgewichts alternativ durch den Fahrer, wenn die automatischen Steuereinrichtung deaktiviert ist, oder durch die automatische Steuerung, wenn diese nicht deaktiviert ist.

2. Fahrzeug nach Anspruch 1, **dadurch gekennzeichnet, dass** die Mittel zum Herstellen eines Gleichgewichts automatisch betätigt werden, einerseits beim Starten des Fahrzeugs und bis die vom Sensor gelieferten Datenwerte den Hauptschwellenwert (S1) erreichen, und andererseits, wenn sich das Fahrzeug bewegt, die durch den Sensor gelieferten Datenwerte über einem kleiner werdenden Hauptschwellenwert (S1') liegen, und dass die Datenwerte, während sie abnehmen, den kleiner werdenden Hauptschwellenwert (S1') erreichen, wobei die Mittel zum Herstellen eines Gleichgewichts demnach so lange automatisch gesteuert werden, wie die Datenwerte unterhalb des kleiner werdenden Hauptschwellenwertes (S1) und bis zum Halt des Fahrzeugs bleiben.

3. Fahrzeug nach Anspruch 1 oder 2, **dadurch gekennzeichnet, dass** es auch Begrenzungsmittel und Blockiermittel für seine Neigung aufweist, die einerseits den Neigungswinkel der neigbaren Elemente auf einen Maximalwert derart begrenzen, dass das Fahrzeug weder beim Anhalten noch beim Fahren kippt, und die andererseits, wenn der Neigungswinkel in dieser Weise begrenzt ist, das Aufrichten des Fahrzeugs verhindern.

4. Fahrzeug nach einem der Ansprüche 1 bis 3, **dadurch gekennzeichnet, dass**, wenn die durch den Sensor gelieferten Datenwerte größer sind als der Hauptschwellenwert (S1), die automatische Steuerung der Mittel zum Herstellen eines Gleichgewichts automatisch deaktiviert wird.

5. Fahrzeug nach einem der Ansprüche 1 bis 3, **dadurch gekennzeichnet, dass**, wenn die durch den Sensor gelieferten Datenwerte größer sind als der Hauptschwellenwert S(1), die Mittel zum Herstellen eines Gleichgewichts automatisch in einem Assistenz-Modus beim Fahren des Fahrzeugs gesteuert werden.

6. Fahrzeug nach einem der Ansprüche 1 bis 5, **dadurch gekennzeichnet, dass** es weiterhin Mittel zur Positionierung in der Vertikalen oder in einer Position sehr nahe an der Vertikalen zumindest des neigbaren Teils sowie Mittel zur automatischen Steuerung der Mittel zur Positionierung in der Vertikalen umfasst, wenn die durch den Sensor gelieferten Datenwerte kleiner sind als ein Schwellenwert zur Vertikalhaltung (S2), aufweist.

7. Fahrzeug nach Anspruch 6, **dadurch gekennzeichnet, dass** die Mittel zur Positionierung in der Vertikalen oder zur Positionierung nahe der Vertikalen automatisch gesteuert werden, einerseits beim Start des Fahrzeugs und bis die durch den Sensor gelieferten Datenwerte den Schwellenwert zur Aufrechterhaltung der Vertikale (S2) erreicht haben, und andererseits, wenn sich das Fahrzeug bewegt, die durch den Sensor gelieferten Datenwerte größer sind als ein kleiner werdender Schwellenwert zur Aufrechterhaltung der Vertikale (S2'), und dass die gelieferten Datenwerte unter Abnahme den kleiner werdenden Schwellenwert zur Aufrechterhaltung der Vertikale (S2') erreichen, wobei die Mittel zur Positionierung in der Vertikalen oder in einer Position sehr nahe der Vertikalen dann so lange gesteuert automatisch werden, wie die Datenwerte unterhalb des kleiner werdenden Schwellenwert zur Aufrechterhaltung der Vertikale (S2) und bis zum Stillstand des Fahrzeugs bleiben.

8. Fahrzeug nach einem der Ansprüche 6 oder 7, **dadurch gekennzeichnet, dass** die Mittel zur Positionierung in der Vertikalen oder zur Positionierung nahe der Vertikalen automatisch gesteuert werden, wenn das Fahrzeug rückwärts fährt.

9. Fahrzeug nach einem der Ansprüche 1 bis 8, **dadurch gekennzeichnet, dass** es einen Handschalter für die vertikale Position zur automatischen Steuerung der Mittel zur Positionierung in der Vertikalen oder zur Positionierung nahe der Vertikalen aufweist.

10. Fahrzeug nach einem der Ansprüche 1 bis 9, **dadurch gekennzeichnet, dass** es Mittel zum Blockieren des neigbaren Teils des Fahrzeugs in der vertikalen Position oder einer Position sehr nahe der Vertikalen aufweist, wenn das Fahrzeug anhält.

11. Fahrzeug nach einem der Ansprüche 1 bis 10, **dadurch gekennzeichnet, dass** es einen Torsionsstab aufweist, der fest mit einem Element (7) zur Lenkung verbunden ist, der die Rotation der Räder (3) bezogen auf die Bewegung des Lenkelements begrenzt.

12. Fahrzeug nach einem der Ansprüche 1 bis 10, **dadurch gekennzeichnet, dass** es Mittel zur Teilauskupplung der Räder des Lenkelements (7) des Fahrzeugs bei einem vorher festgelegten Lenkwinkel, Mittel zur automatischen Steuerung der Mittel zur Teilauskupplung aufweist und dass die Mittel zur Teilauskupplung entsprechend den durch den Sensor gelieferten Datenwerten oberhalb oder unterhalb eines vorher festgelegten Schwellenwerts der Teilauskupplung (S3, S4) automatisch gesteuert oder automatisch deaktiviert werden.

13. Fahrzeug nach Anspruch 12, **dadurch gekennzeichnet, dass** die Mittel zur Teilauskupplung und die Mittel zur automatischen Steuerung der Mittel zur Teilauskupplung aus einem Torsionsstab bestehen, der mit dem Lenkelement (7) fest verbunden ist.

14. Fahrzeug nach einem der Ansprüche 1 bis 13, das Folgendes aufweist: einen Fahrersitz (20) in einem Fahrerhaus (2) mit Abmessungen der Art, dass es in der Breite nur eine einzige Person aufnehmen kann, **dadurch gekennzeichnet, dass** jede Seite des Fahrerhauses mit einer Zugangstür (43) ausgestattet ist und dass das Fahrerhaus (2) eine bewegliche Dachplatte (44) aufweist, und dadurch, dass jede Zugangstür (43) und die Dachplatte (44) sich entweder unabhängig voneinander oder zwei bis drei von ihnen gleichzeitig öffnen und wieder schließen.

## Claims

1. Motor vehicle with at least three wheels (3), including balancing means by inclination of at least the part of its chassis (1) which supports the driver's cab, and one or more speed, acceleration and/or inclination sensors,
with at least a speed sensor, such that said balancing means are adapted to be controlled by an automatic control device of the type including an actuator and a calculator or by manual control of a driver of said vehicle,
and that switching means are provided to activate said automatic control device of the balancing means as soon as the information provided by said speed sensor or said sensors is below a main threshold (S1), so that under such travelling conditions said balancing means are automatically controlled, **characterised in that** said switching means being further provided to allow the deactivation of said automatic control device of said balancing means as soon as the information provided by said speed sensor or said sensors is above said main threshold (S1), so that under such travelling conditions, said balancing means are alternatively controlled by either the driver if said automatic control device is deactivated, or by said automatic control device if it is not deactivated.

2. Vehicle according to claim 1, **characterised in that** said balancing means are automatically controlled, on the one hand, upon starting the vehicle and until the information provided by said sensor reaches said main threshold (S1), and, on the other hand, when, the vehicle being in motion, the information provided by said sensor is above a descending main threshold (S1') and that said information reaches, while decreasing, said descending main threshold (S1'), said balancing means being then automatically controlled so long as said information remains below said descending main threshold (S1) and until said vehicle comes to a stop.

3. Vehicle according to either one of claims 1 or 2, **characterised in that** it also includes means for limiting and means for blocking its inclination which on the one hand limit the inclination angle of the inclinable elements to a maximum value so that the vehicle does not tip over while stopped or during travel, and which on the other hand, while the inclination angle is thus limited, prevent the vehicle from straightening up.

4. Vehicle according to any one of claims 1 to 3, **characterised in that** when the information provided by said sensor is above said main threshold (S1), automatic control of said balancing means is automatically deactivated.

5. Vehicle according to any one of claims 1 to 3, **characterised in that** when the information provided by said sensor is above said main threshold (S1), said balancing means are automatically controlled in a vehicle driving assistance mode.

6. Vehicle according to any one of claims 1 to 5, **characterised in that** it further includes means for vertical positioning or for a positioning very close to the vertical of at least its inclinable part, as well as means to automatically control said vertical positioning means when the information provided by said sensor is below a vertical position threshold (S2).

7. Vehicle according to claim 6, **characterised in that** said means for vertical positioning or for a positioning very close to the vertical are automatically controlled on the one hand, upon starting the vehicle and until the information provided by said sensor reaches said vertical position threshold (S2), and, on the other hand, when, the vehicle being in motion, the information provided by said sensor is above a descending vertical position threshold (S2') and that said provided information reaches, while decreasing, said descending vertical position threshold (S2'), said means for vertical positioning or for a positioning very close to the vertical being then automatically controlled so long as said information remains below said descending vertical position threshold (S2) and until the vehicle comes to a stop.

8. Vehicle according to either one of claims 6 or 7, **characterised in that** said vertical positioning means are automatically controlled when the vehicle is reversing.

9. Vehicle according to any one of claims 1 to 8, **characterised in that** it includes a manual vertical position switch for automatically controlling said means for vertical positioning or for a positioning very close to the vertical.

10. Vehicle according to any one of claims 1 to 9, **characterised in that** it includes means for blocking the inclinable part of said vehicle in vertical position or in a position very close to the vertical when said vehicle is not in motion.

11. Vehicle according to any one of claims 1 to 10, **characterised in that** it includes a torsion bar integral with a direction control unit (7) which limits the rotation of the wheels (3) in relation to the movement of said direction control unit.

12. Vehicle according to any one of claims 1 to 10, **characterised in that** it includes means for partially decoupling the wheels from the direction control unit (7) of the vehicle over a predetermined steering lock angle, means for automatically controlling said partial decoupling means, and **in that** said partial decoupling means are automatically controlled or automatically deactivated according to whether the information provided by said sensor is respectively above or below a predetermined partial decoupling threshold (S3, S4).

13. Vehicle according to claim 12, **characterised in that** said partial decoupling means and said means for automatically controlling said partial decoupling means are comprised of a torsion bar integral with the direction control unit (7).

14. Vehicle according to any one of claims 1 to 13 comprising a driver's seat (20) included in a driver's cab (2) of dimensions such that it may only accommodate one person widthwise, **characterised in that** each side of the driver's cab is equipped with an access door (43), **in that** said driver's cab (2) includes a mobile roof panel (44), and **in that** each access door (43) and said roof panel (44) open and close either independently of each other, or simultaneously by two or three of them.
